# EUROPÄISCHE PATENTSCHRIFT

(11) **EP 1 443 259 B1**
(45) Veröffentlichungstag und Bekanntmachung des Hinweises auf die Patenterteilung: **12.07.2006**
(21) Anmeldenummer: 03025566.5
(22) Anmeldetag: 08.11.2003
(51) Int. Cl.: F16L 59/21, F16L 59/02, F16L 59/16

(54) **Dämmeinrichtung für Leitungssysteme mit Kompensatoren**
Insulation structure for pipes with compensators
Dispositif d'isolation pour tuyaux avec compensateurs

(30) Priorität: 24.01.2003 AT 932003
(43) Veröffentlichungstag der Anmeldung: 04.08.2004
(73) Patentinhaber: GE Jenbacher GmbH & Co. OHG, 6200 Jenbach (AT)
(72) Erfinder: Rissbacher, Adolf, 6230 Brixlegg (AT); Gruber, Friedrich, 6283 Hippach 44 (AT)
(74) Vertreter: Torggler, Paul Norbert

(56) Entgegenhaltungen:
- EP-A- 0 229 345
- EP-A- 1 150 057
- EP-A- 1 182 177
- WO-A-02/31399
- US-A- 3 557 840

## Beschreibung

Die vorliegende Erfindung betrifft eine Dämmeinrichtung zum zumindest teilweisen Umfassen eines Leitungssystems, insbesondere eines Leitungssystems mit mindestens einer Einrichtung zur Längen- und/oder Breitenkompensation, mit mindestens zwei voneinander getrennten, überlappend miteinander über eine Verbindung verbindbaren Dämmkörpern, wobei der Innenquerschnitt eines ersten Dämmkörpers im Wesentlichen über die gesamte Erstreckung des ersten Dämmkörpers, vorzugsweise nur geringfügig, größer als der Außenquerschnitt eines zweiten Dämmkörpers ist und der zweite Dämmkörper in den ersten Dämmkörper einführbar ist.

Zur Wärmedämmung, aber auch zur Schallisolierung von Leitungssystemen, wie zum Beispiel Motorabgasleitungen, sind unterschiedlichste Dämmsysteme beim Stand der Technik bekannt. Häufig werden Textilgewebematten aus feuerfesten Materialien verwendet. Diese sind ähnlich wie Polsterungen aufgebaut, das heißt sie bestehen aus einem Innen- oder Auflagetuch, einer Mattenfüllung und einem Außentuch. Als Matten- bzw. Isolierfüllung wird in erster Linie Glas-, Keramik- oder Gesteinswolle eingesetzt. Die einzelnen Dämmkörper bzw. Matten werden geeignet vorkonfektioniert, um die Abgasleitungen herumgewickelt und mit Draht- oder Metallhaken befestigt. Bei längeren und komplexeren Leitungssystemen bzw. Abgasleitungen ist oft eine Mehrteiligkeit der Dämmkörper bzw. des Mattensystems erforderlich. Um auch bei diesen komplexeren Leitungssystemen eine ausreichende Qualität der Wärmedämmung bzw. Schallisolierung sicherstellen zu können, ist mit den beim Stand der Technik bekannten Systemen ein erheblicher Montageaufwand nötig. Eine Möglichkeit der Vereinfachung ist in der JP 2000 320 787 A gezeigt. Hier sind die Verbindungsbereiche der Dämmkörper stufenförmig ausgebildet, sodass die Dämmkörper bis zum Anschlag der Stufe ineinander geschoben werden können. Es besteht jedoch häufig das Problem, dass sich die bisher bekannten Dämm- bzw. Isoliermatten nach der Montage durch Erschütterung oder Vibrationen zumindest teilweise wieder lösen oder verschieben, womit sich die Dämm- und Isolierungseigenschaften insgesamt mit der Zeit verschlechtern. Dieses Problem tritt auch bei der JP 2000 320 787 A auf, da die Dämmkörper immer nur so weit ineinandergeschoben werden können, wie es die vorgefertigte Stufe erlaubt. Eine Anpassung der Länge des Verbindungsbereiches, zum Beispiel an den Grad der Erschütterung oder Vibration, ist nicht möglich. Besonders häufig treten diese Probleme insbesondere dann auf, wenn verschiedene Bereiche des Leitungssystems durch Einrichtungen zur Längen- und/oder Breitenkompensation oder dergleichen unterbrochen und dadurch unterschiedliche Schwingphasen und Schwingamplituden im Leitungssystem vorhanden sind.

Aus der EP 0 229 345 A2 ist eine gattungsgemäße Dämmeinrichtung bekannt, bei der benachbarte Dämmkörper deutlich überlappend angeordnet sind, wodurch sich die benachbarten Dämmkörper bei Vibrationen nicht so leicht wieder voneinander lösen können.

Die bekannten Dämmeinrichtungen haben jedoch das Problem, dass es durch Vibrationen zum Aufscheuern und damit zum Zerstören der Dämmkörper kommen kann.

Aufgabe der Erfindung ist es, dies so weit wie möglich zu verhindern.

Erfindungsgemäß ist hierzu vorgesehen, dass mindestens ein Dämmkörper in dem Bereich seiner Oberfläche, in dem er auf dem Leitungssystem aufliegt und/oder zumindest ein Dämmkörper im Bereich der Verbindung auf zumindest einer seiner Oberflächen eine Geflechtschicht, vorzugsweise eine Drahtgeflechtschicht, aufweist.

Um ein frühzeitiges Zerstören bzw. Beeinträchtigen der Dämmkörper erfindungsgemäß zu verhindern, kann somit einerseits vorgesehen sein, dass mindestens ein Dämmkörper in dem Bereich seiner Oberfläche, in dem er auf dem Leitungssystem aufliegt eine Geflechtschicht, vorzugsweise eine Drahtgeflechtschicht, aufweist. Hierdurch ist vor allem ein Aufscheuern der Dämmkörper am Leitungssystem verhindert. Um darüber hinaus auch ein Aufscheuern der einzelnen Dämmkörper aneinander zu unterbinden, kann vorgesehen sein, dass zumindest ein Dämmkörper im Bereich der Verbindung auf zumindest einer seiner Oberflächen eine Geflechtschicht, vorzugsweise eine Drahtgeflechtschicht, aufweist.

Durch die überlappende Ausbildung der Übergangsstellen zwischen den einzelnen Dämmkörpern ist zum Einen eine einfache und schnelle Montage möglich, wobei ohne besonderen Aufwand automatisch sicher gestellt ist, dass keine Lücken in der Dämmung bzw. Isolierung entstehen. Andererseits bleibt diese qualitativ sehr hochwertige Dämmung bzw. Isolierung auch bei dauerhafter Belastung durch Erschütterung oder Vibration in gleichbleibender Qualität erhalten. Kleinere Verschiebungen einzelner Dämmkörper werden durch die überlappenden Bereiche kompensiert. Die Länge der überlappenden Bereich kann an den Grad der Erschütterung von vornherein angepasst werden.

Bei rohrförmigen Leitungssystemen, wie zum Beispiel Abgasleitungssystemen, sieht eine günstige Variante vor, dass mindestens ein Dämmkörper im wesentlichen rohrförmig ausgebildet ist. Hierbei bezieht sich die Bezeichnung rohrförmig im wesentlichen darauf, dass die Leitungen des Leitungssystems vollständig von den Dämmkörpern umfasst sind. Hierbei ist es im Allgemeinen günstig, wenn die Form einer inneren Öffnung mindestens eines Dämmkörpers an die äußere Form zumindest eines Abschnitts des Leitungssystems im Wesentlichen angepasst und/oder anpassbar ist. Ist in dem Leitungssystem auch mindestens eine Einrichtung zur Längen- und/oder Breitenkompensation vorhanden, so sieht eine günstige Variante wiederum vor, dass die Dämmkörper im Bereich außerhalb der Einrichtung zur Längen- und/oder Breitenkompensation im Wesentlichen am Leitungssystem anliegen und der Bereich der Einrichtung zur Längen- und/oder Breitenkompensation mit einem Dämmkörper, vorzugsweise mit größerem Innenhohlraum, ohne Berührung mit der Einrichtung zur Längen- und/oder Breitenkompensation überbrückt ist.

Zur Verbindung der einzelnen Dämmkörper sind verschiedene Varianten denkbar. Besonders günstig ist, wenn der Bereich zwischen zwei Dämmkörpern von einem dritten Dämmkörper brückenartig überspannbar ist. Zum Einen kann vorgesehen sein, dass die Verbindung der Dämmkörper eine von selbst klemmende, vorzugsweise wieder lösbare, Steckverbindung ist. Alternativ oder ergänzend sehen andere Varianten jedoch auch vor, dass die überlappend verbundenen Dämmkörper Haken und/oder Ösen und/oder dergleichen zum Verspannen aufweisen. Ob nun eine einfache Steckverbindung oder eine Verbindung durch Verspannen gewählt wird, hängt unter anderem von den im Leitungssystem zu erwartenden Erschütterungen bzw. Vibrationen ab. Ist mit nur geringfügigen oder keinen Vibrationen zu rechnen, so besteht im Allgemeinen in der Steckverbindung die einfachere und schnellere Montagevariante. Beide Montagevarianten können natürlich auch kombiniert miteinander verwendet werden.

Eine günstige Möglichkeit sieht vor, dass mindestens ein Dämmkörper eine Dämmmatte, vorzugsweise mit einem Innentextil und/oder einem Außentextil und einem gegebenenfalls dazwischen angeordneten Dämmstoff aufweist. Der Vorteil bei der Verwendung von mattenartigen Dämmkörpern liegt vor allem darin, dass diese gut an die Kontur des Leitungssystem angepasst werden können.

Weitere Einzelheiten und Merkmale der vorliegenden Erfindung ergeben sich aus der nachfolgenden Figurenbeschreibung. Dabei zeigt:
- Fig. 1: einen Schnitt durch ein Leitungssystem mit Dämmkörpern, welche überlappen,
- Fig. 2: einen Längsschnitt, durch einen direkt am Leitungssystem anliegenden Dämmkörper,
- Fig. 3: einen Querschnitt durch den in Fig. 2 dargestellten Dämmkörper,
- Fig. 4: einen den Bereich zwischen zwei direkt anliegenden Dämmkörpern überbrückenden Dämmkörper in einem Längsschnitt,
- Fig. 5: einen Querschnitt durch das in Fig. 4 gezeigte Ausführungsbeispiel eines Dämmkörpers und
- Fig. 6: ein Beispiel, wie benachbarte Dämmkörper miteinander verspannt werden können.

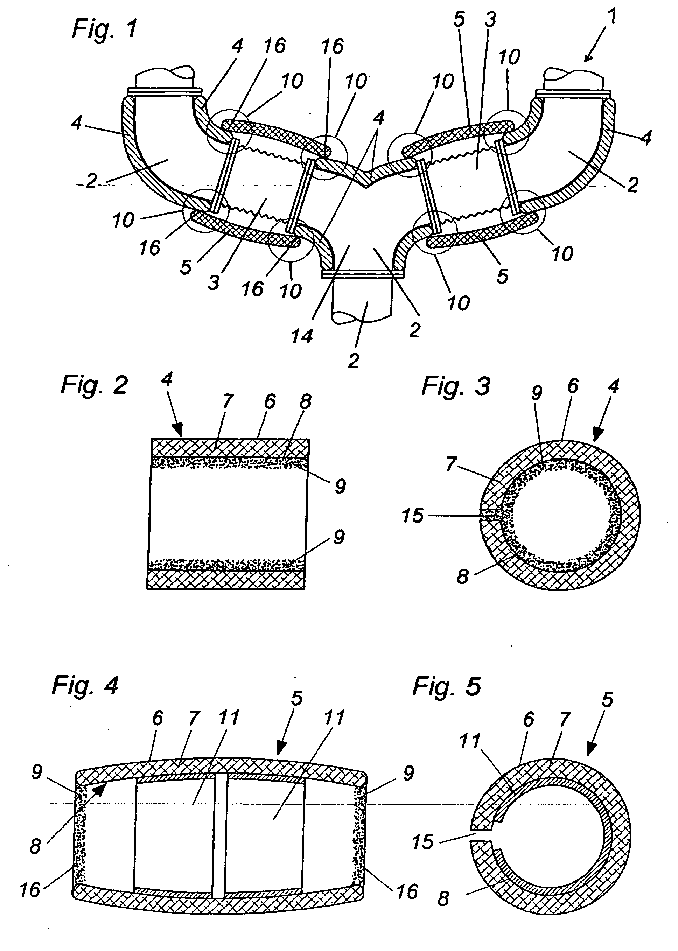

Bei dem in Fig. 1 gezeigten Ausführungsbeispiel sind die Dämmkörper 4 und 5 als Matten in einem Verbundsystem aufgebaut. Die Auflagedämmkörper 4 liegen hierbei direkt an den einfachen Leitungsbereichen 2 an. Die ebenfalls im Leitungssystem angeordneten Einrichtungen 3 zur Längen- und Breitenkompensation sind mit Hilfe von brückenartigen Dämmkörpern 5 isoliert bzw. gedämmt. In den Bereichen der Einrichtungen 3 liegen die Dämmkörper 5 in der Regel nicht direkt am Leitungssystem 1 an. Die Verbindung der benachbarten Dämmkörper 4 und 5 ist in den Bereichen 10 überlappend ausgebildet. Der Innenquerschnitt eines ersten brückenartigen Dämmkörpers 5 ist, vorzugsweise nur geringfügig, größer als der Außenquerschnitt des zweiten in der Regel direkt am Leitungssystem anliegenden Dämmkörpers 4, wodurch der zweite Dämmkörper 4 in den ersten Dämmkörper 5 einsteckbar ist. Wie in Fig. 1 gezeigt, ist es hierbei günstig, wenn der erste brückenartige Dämmkörper 5 zumindest zwei offene Enden aufweist, in die jeweils ein zweiter Dämmkörper 4 einführbar ist. In dieser Weise wird wie in Fig. 1 gezeigt, eine abwechselnde Folge von Auflagedämmkörpern oder -matten 4 und Brückendämmkörpern oder -matten 5 erstellt. In den Verzweigungsbereichen 14 des Leitungssystems 1 weisen die Dämmkörper 4 auch mehr als zwei Öffnungen auf.

In den Fig. 2 bis 5 sind die Auflagedämmkörper 4 und die Brückendämmkörper 5 in Längs- und Querschnitten dargestellt. Sie bestehen im gezeigten Ausführungsbeispiel aus Matten, welche ein Außentextil 6, einen Dämmstoff 7 und ein Innentextil 8 aufweisen. Als Dämmstoffe 7 kommen hierbei grundsätzlich alle- beim Stand der Technik bekannten flexiblen oder steifen Isolierfüllungen bzw. Matten, wie zum Beispiel aus Glas-, Keramik- oder Gesteinswolle in Frage. Die Auflagedämmkörper 4 weisen, vorzugsweise über ihre gesamte innere Oberfläche, eine Geflechtschicht 9 auf. Diese verhindert ein Aufscheuern der Dämmkörper 4 an den Leitungen 2. Die Geflechtschicht 9 kann zum Beispiel als Drahtgeflechtschicht ausgebildet und zwischen 3 mm und 8 mm dick sein. Günstig ist zum Beispiel die Verwendung von Stahldrahtgestrick mit einer Drahtstärke zwischen 0,1 mm und 0,6 mm als Geflechtschicht 9. Wie in Fig. 3 und 5 dargestellt, weisen die Dämmkörper 4 und 5 günstigerweise einen Öffnungsschlitz 15 auf, welcher das Aufstecken der Dämmkörper auf das Leitungssystem 1 erleichtert. Der Öffnungsschlitz 15 wird nach der Montage verschlossen, zum Beispiel durch Verspannen oder Verkleben.

Fig. 4 zeigt einen brückenartigen Dämmkörper 5, der unter anderen die selben Matten, wie der in Fig. 2 gezeigte Auflagedämmkörper aufweisen kann. Im Unterschied zum Auflagedämmkörper 4 reicht es jedoch aus, wenn die Geflechtschicht 9 im Inneren des Innenquerschnitts des Dämmkörpers 5 nur in dem Verbindungsbereich 16 ausgebildet ist, in welchem der brückenartige Dämmkörper 5 nach erfolgter Montage auf dem benachbarten Auflagedämmkörper 4 aufliegt. Die Geflechtschicht 9 puffert die Relativbewegungen der beiden miteinander verbundenen Dämmkörper ab, sodass Scheuerschäden vermieden sind.

Zur Montage werden die Auflagematten 4 formschlüssig und (rutsch-)fest auf die Abgasrohre 2 aufgespannt, während die Brückenmatten bzw. -dämmkörper 5 freitragende Schalenelemente darstellen. Bei der Verwendung von Brückenmatten 5 ist es hierbei günstig, wenn diese integrierte Stützelemente 11 aufweisen. Diese Stützelemente 11 bestehen aus entsprechend, zum Beispiel schalenförmig, geformten und günstigerweise biegbaren Gittern, zum Beispiel aus Edelstahl, oder Blechen, welche vorzugsweise glatt, gelocht oder geriffelt sein können und an der Innenseite mit der Matte 5 verbunden sind. Die Stützelemente 11 verleihen der Matte 5 die erforderliche Formsteifigkeit und Tragfähigkeit. Werden in sich zumindest teilweise steife Dämmkörper 5 verwendet, so können die Stützelemente entfallen.

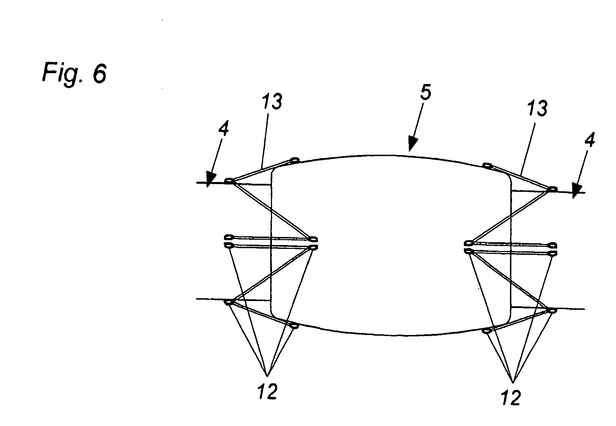

Fig. 6 zeigt, wie die benachbarten Dämmkörper 4 und 5 mittels Haken oder Ösen 12, welche vorzugsweise aus Metall gefertigt sind, und einem Draht 13 miteinander und mit dem Leitungssystem 1 verspannt werden können. Durch das Verspannen wird eine geschlossene sowie kompakte und festsitzende Dämm- bzw. Isolationseinheit gebildet. Selbst komplexe Leitungssysteme können durch die erfindungsgemäße Dämmeinrichtung sehr einfach und effizient isoliert werden. Hierbei kann die Dämmeinrichtung sowohl zur Wärmedämmung als auch zur Schallisolierung verwendet werden.

## Patentansprüche

1. Dämmeinrichtung zum zumindest teilweisen Umfassen eines Leitungssystems (1), insbesondere eines Leitungssystems (1) mit mindestens einer Einrichtung (3) zur Längen- und/oder Breitenkompensation, mit mindestens zwei voneinander getrennten, überlappend miteinander über eine Verbindung (16) verbindbaren Dämmkörpern (4, 5), wobei der Innenquerschnitt eines ersten Dämmkörpers (5) im Wesentlichen über die gesamte Erstreckung des ersten Dämmkörpers (5), vorzugsweise nur geringfügig, größer als der Außenquerschnitt eines zweiten Dämmkörpers (4) ist und der zweite Dämmkörper (4) in den ersten Dämmkörper (5) einführbar ist, **dadurch gekennzeichnet, dass** mindestens ein Dämmkörper (4) in dem Bereich seiner Oberfläche, in dem er auf dem Leitungssystem (1) aufliegt und/oder zumindest ein Dämmkörper (4, 5) im Bereich der Verbindung (16) auf zumindest einer seiner Oberflächen eine Geflechtschicht (9), vorzugsweise eine Drahtgeflechtschicht, aufweist.

2. Dämmeinrichtung nach Anspruch 1, **dadurch gekennzeichnet, dass** mindestens ein Dämmkörper (4, 5) im wesentlichen rohrförmig ausgebildet ist.

3. Dämmeinrichtung nach Anspruch 1 oder 2, **dadurch gekennzeichnet, dass** die Verbindung (16) der Dämmkörper eine von selbst klemmende, vorzugsweise wieder lösbare, Steckverbindung ist.

4. Dämmeinrichtung nach einem der Ansprüche 1 bis 3, **dadurch gekennzeichnet, dass** die überlappend verbundenen Dämmkörper Haken und/oder Ösen (12) zum Verspannen aufweisen.

5. Dämmeinrichtung nach einem der Ansprüche 1 bis 4, **dadurch gekennzeichnet, dass** mindestens ein Dämmkörper (4, 5) eine Dämmmatte, vorzugsweise mit einem Innentextil (8) und/oder einem Außentextil (6) und einem gegebenenfalls dazwischen angeordneten Dämmstoff (7), aufweist.

6. Dämmeinrichtung nach einem der Ansprüche 1 bis 5, **dadurch gekennzeichnet, dass** der Bereich zwischen zwei Dämmkörpern (4) von einem dritten Dämmkörper (5) brückenartig überspannbar ist.

7. Dämmkörper nach einem der Ansprüche 1 bis 6, **dadurch gekennzeichnet, dass** die Geflechtschicht (9) im Inneren des Innenquerschnitts des ersten Dämmkörpers (5) im Bereich der Verbindung (16) angeordnet ist.

8. Dämmkörper nach einem der Ansprüche 1 bis 7, **dadurch gekennzeichnet, dass** der erste Dämmkörper (5) zumindest zwei offene Enden aufweist, in die jeweils ein zweiter Dämmkörper (4) einführbar ist.

9. Dämmeinrichtung nach einem der Ansprüche 1 bis 8, **dadurch gekennzeichnet, dass** zumindest ein Dämmkörper (5) ein Stützelement (11), vorzugsweise aus Edelstahlgitter, zur Stabilisierung seiner Form aufweist.

10. Anordnung aus einer Dämmeinrichtung nach einem der Ansprüche 1 bis 9 und einem Leitungssystem, **dadurch gekennzeichnet, dass** die Form einer inneren Öffnung mindestens eines Dämmkörpers (4, 5) an die äußere Form zumindest eines Abschnitts des Leitungssystems (1) im wesentlichen angepasst und/oder anpassbar ist.

11. Anordnung nach Anspruch 10, mit mindestens einer Einrichtung zur Längen- und/oder Breitenkompensation im Leitungssystem, **dadurch gekennzeichnet, dass** die Dämmkörper (4) im Bereich außerhalb der Einrichtung (3) zur Längen- und/oder Breitenkompensation im wesentlichen am Leitungssystem (1) anliegen und der Bereich mit der Einrichtung (3) zur Längen- und/oder Breitenkompensation mit einem Dämmkörper (5), vorzugsweise mit größerem Innenhohlraum, ohne Berührung mit der Einrichtung (3) zur Längen- und/oder Breitenkompensation überbrückt ist.

12. Verwendung einer Dämmeinrichtung nach einem der Ansprüche 1 bis 11, zur Wärmedämmung und/oder Schallisolierung, vorzugsweise eines Abgasleitungssystems (1) einer Brennkraftmaschine.

## Claims

1. An insulating arrangement for at least partially enclosing a conduit system (1), in particular a conduit system (1) with at least one device (3) for length and/or width compensation, comprising at least two mutually separated insulating bodies (4, 5) which can be connected together in overlapping relationship by way of a connection (16), wherein the internal cross-section of a first insulating body (5) substantially over the entire extent of the first insulating body (5) is preferably only slightly larger than the external cross-section of a second insulating body (4) and the second insulating body (4) can be introduced into the first insulating body (5), **characterised in that** at least one insulating body (4) in the region of its surface in which it lies on the conduit system (1) and/or at least one insulating body (4, 5) in the region of the connection (16) on at least one of its surfaces has a mesh layer (9), preferably a wire mesh layer.

2. An insulating arrangement according to claim 1 **characterised in that** at least one insulating body (4, 5) is of a substantially tubular configuration.

3. An insulating arrangement according to claim 1 or claim 2 **characterised in that** the connection (16) of the insulating bodies is a plug connection which is self-clamping and preferably releasable again.

4. An insulating arrangement according to one of claims 1 to 3 **characterised in that** the overlappingly connected insulating bodies have hooks and/or eyes (12) for bracing purposes.

5. An insulating arrangement according to one of claims 1 to 4 **characterised in that** at least one insulating body (4, 5) has an insulating mat, preferably with an internal textile (8) and/or an external textile (6) and an insulating material (7) optionally arranged therebetween.

6. An insulating arrangement according to one of claims 1 to 5 **characterised in that** the region between two insulating bodies (4) can be spanned over bridge-like by a third insulating body (5).

7. An insulating body according to one of claims 1 to 6 **characterised in that** the mesh layer (9) is arranged in the interior of the internal cross-section of the first insulating body (5) in the region of the connection (16).

8. An insulating body according to one of claims 1 to 7 **characterised in that** the first insulating body (5) has at least two open ends, into each of which a respective second insulating body (4) can be introduced.

9. An insulating arrangement according to one of claims 1 to 8 **characterised in that** at least one insulating body (5) has a support element (11), preferably of high-quality steel mesh, for stabilising the shape thereof.

10. An assembly comprising an insulating arrangement according to one of claims 1 to 9 and a conduit system **characterised in that** the shape of an inner opening of at least one insulating body (4, 5) is substantially adapted and/or adaptable to the external shape at least of a portion of the conduit system (1).

11. An assembly according to claim 10 comprising at least one device for length and/or width compensation in the conduit system **characterised in that** the insulating bodies (4) bear substantially against the conduit system (1) in the region outside the device (3) for length and/or width compensation and the region with the device (3) for length and/or width compensation is bridged with an insulating body (5), preferably with a larger internal cavity, without contact with the device (3) for length and/or width compensation.

12. Use of an insulating arrangement according to one of claims 1 to 11 for heat insulation and/or sound insulation, preferably of an exhaust pipe system (1) of an internal combustion engine.

## Revendications

1. Dispositif isolant entourant au moins en partie un système de conduite (1), en particulier un système de conduite (1) équipé d'au moins un dispositif (3) de compensation de longueur et/ou de largeur avec au moins deux corps isolants (4, 5) distincts se chevauchant pouvant être raccordés via une connexion (16), la coupe transversale interne d'un premier corps isolant (5) n'étant, essentiellement sur toute la longueur du premier corps isolant (5), de préférence que très faiblement supérieure à la coupe transversale externe d'un deuxième corps isolant (4) et le deuxième corps isolant (4) pouvant être inséré dans le premier corps isolant (5), **caractérisé en ce que** au moins un corps isolant (4) présente, dans la zone de sa surface dans laquelle il repose sur le système de conduite (1), et/ou au moins un corps isolant (4, 5) présente, dans la zone de la connexion (16) avec au moins l'une de ses surfaces, une couche de treillis (9), de préférence une couche de tissage de fils.

2. Dispositif isolant selon la revendication 1, **caractérisé en ce que** au moins un corps isolant (4, 5) se présente essentiellement sous forme de tuyau.

3. Dispositif isolant selon la revendication 1 ou 2, **caractérisé en ce que** la connexion (16) des corps isolants est une fiche de raccordement autocollante de préférence à nouveau détachable.

4. Dispositif isolant selon l'une quelconque des revendications 1 à 3, **caractérisé en ce que** les corps isolants reliés en se chevauchant présentent des crochets et/ou des anneaux (12) pour de tension.

5. Dispositif isolant selon l'une quelconque des revendications 1 à 4, **caractérisé en ce que** au moins un corps isolant (4, 5) présente un paillasson isolant composé de préférence d'un textile interne (8) et/ou d'un textile externe (6) et d'une substance isolante (7) placée le cas échéant entre les deux.

6. Dispositif isolant selon l'une quelconque des revendications 1 à 5, **caractérisé en ce que** la zone située entre les deux corps isolants (4) peut être recouverte d'un troisième corps isolant (5) en manière de pont.

7. Dispositif isolant selon l'une quelconque des revendications 1 à 6, **caractérisé en ce que** la couche de treillis (9) est placée à l'intérieur de la coupe transversale interne du premier corps isolant (5) dans la zone de la connexion (16).

8. Dispositif isolant selon l'une quelconque des revendications 1 à 7, **caractérisé en ce que** le premier corps isolant (5) présente au moins deux extrémités ouvertes dans chacune desquelles un deuxième corps isolant (4) peut être inséré.

9. Dispositif isolant selon l'une quelconque des revendications 1 à 8, **caractérisé en ce que** au moins un corps isolant (5) présente un élément de support (11) composé de préférence d'un treillage d'acier inoxydable pour stabiliser sa forme.

10. Agencement d'un dispositif isolant selon l'une quelconque des revendications 1 à 9 et d'un système de conduite, **caractérisé en ce que** la forme d'une ouverture interne d'au moins un corps isolant (4, 5) est essentiellement adaptée et/ou adaptable à la forme externe d'au moins un segment du système de conduite (1).

11. Agencement selon la revendication 10 présentant dans le système de conduite au moins un dispositif de compensation de longueur et/ou de largeur, **caractérisé en ce que** le corps isolant (4) repose, dans la zone située en dehors du dispositif (3) de compensation de longueur et/ou de largeur, essentiellement sur le système conducteur (1) et **en ce que** la zone contenant le dispositif (3) de compensation de longueur et/ou de largeur est recouverte d'un corps isolant (5) présentant de préférence un espace creux interne plus grand n'entrant pas en contact avec le dispositif (3) de compensation de longueur et/ou de largeur.

12. Utilisation d'un dispositif isolant selon l'une quelconque des revendications 1 à 11 pour isoler contre la chaleur et/ou contre le bruit de préférence un système de conduite de gaz d'échappement (1) d'une machine à combustion interne.
